# EUROPEAN PATENT APPLICATION

(11) **EP 2 566 107 A1**
(43) Date of publication of application: **06.03.2013**
(21) Application number: 11791899.5
(22) Date of filing: 30.05.2011
(51) Int. Cl.: H04L 12/28

(54) **APPARATUS AND METHOD FOR ACHIEVING THE FUNCTION OF DOMAIN NAME RESOLUTION AGENT**

(30) Priority: 07.06.2010 CN 201010192965
(71) Applicant: ZTE Corporation, Shenzhen, Guangdong 518057 (CN)
(72) Inventor: HE, Baolin, Shenzhen Guangdong 518057 (CN); LI, Hui, Shenzhen Guangdong 518057 (CN); CHEN, Hao, Shenzhen Guangdong 518057 (CN)
(74) Representative: Nilsson, Lars-Magnus
(86) International application number: PCT/CN2011/074927
(87) International publication number: WO 2011/153908

(57) **Abstract**

The disclosure provides an apparatus for achieving the function of DNS resolution agent, a Domain Name System (DNS) server list adjusting unit in the apparatus is configured to, when no request response is received from a DNS server in a waiting time, reduce the priority of the DNS server to the lowest level in a DNS server list. The disclosure also provides a method for achieving the function of DNS resolution agent, the method includes the following steps: when a DNS request is not a repeated request, a DNS request message is sent to DNS servers in a DNS server list in turn according to a fixed time interval; when a valid request response is received in a waiting time, the request response is delivered to a DNS requester; when no request response is received from the DNS server in the waiting time, the priority of the DNS server is reduced to the lowest level in the DNS server list. With the disclosure, a DNS request from a device attached to a home gateway can be responded accurately and speedily and the DNS resolution efficiency can be increased significantly.

## Description

### TECHNICAL FIELD

The disclosure relates to the field of home gateway services, and more particularly, to an apparatus and method for achieving the function of Domain Name System (DNS) resolution agent.

### BACKGROUND

With continuous development of the Internet and its application technologies, more and more richer applications and services are carried out by utilizing the Internet. Along with these richer services, requirements on complicated networking configuration on home gateways are increasingly higher, and particularly, the networking requirement of supporting multiple routing Wide Area Network (WAN) connections has gradually become the configuration mainstream of the home gateways. The function of DNS resolution agent on a gateway is inevitably involved in the use of combining routing WAN connections and involved in various services including network surfing, network television and video monitoring etc. which are frequently involved by devices attached to gateways.

When a service on a home gateway is carried out practically, requirements on the function of DNS resolution agent will be extremely high because of networking differences, and combinations of multiple DNS servers brought about by supporting multiple routing WAN connections. Currently, the function of DNS resolution agent is realized by polling all DNS servers, i.e. after receiving a DNS request message from an attached device, the home gateway sends a packet to all DNS servers, which is low in efficiency and causes the problem of low accuracy.

For example, if a DNS server which is unavailable is put in front of all DNS servers, then the request message is sent to the DNS server which is unavailable first each time, thus lowering the inquiry efficiency. For another example, if a DNS server is disabled suddenly, the situation above may also occur. Moreover, how to utilize each DNS server more efficiently is not generally involved in existing technologies, the disclosure will focus on solving these problems.

### SUMMARY

The disclosure aims to provide a method and apparatus for achieving the function of DNS resolution agent to solve the problems of low efficiency and low accuracy in achieving the function of DNS resolution agent on a home gateway in the existing technologies.

According to an aspect of the disclosure, an apparatus for achieving the function of DNS resolution agent is provided, the apparatus includes:
a DNS request receiving and determining unit, configured to receive a DNS request from a DNS requester and determine whether the DNS request is a repeated request;
a DNS request sending and receiving unit configured to, when determining that the DNS request is not a repeated request, send a DNS request message to DNS servers in a DNS server list in turn according to a fixed time interval, and wait to receive a request response returned by the DNS server in a waiting time not greater than the fixed time interval;
a DNS request response delivering unit, configured to deliver a valid request response received in the waiting time to the DNS requester;
a DNS server list adjusting unit configured to, when no request response is received from a DNS server in the waiting time, reduce the priority of the DNS server to the lowest level in the DNS server list.

According to another aspect of the disclosure, a method for achieving the function of DNS resolution agent is provided, the method includes:
receiving a DNS request from a DNS requester and determining whether the DNS request is a repeated request;
when the DNS request is not a repeated request, sending a DNS request message to DNS servers in a DNS server list in turn according to a fixed time interval and waiting to receive a request response returned by the DNS server in a waiting time not greater than the fixed time interval;
when a valid request response is received in the waiting time, delivering the request response to the DNS requester;
when no request response is received from a DNS server in the waiting time, reducing the priority of the DNS server in the DNS server list to the lowest level.

Compared with existing technologies, the disclosure has the following beneficial effect: with the disclosure, a DNS request from a device attached to a home gateway can be responded accurately and speedily by determining a repeated request and identifying an available DNS server, thus increasing the DNS resolution efficiency significantly and satisfying the requirement of DNS resolution agent of complicated routing networking on the home gateway.

### BRIEF DESCRIPTION OF THE DRAWINGS

Fig. 1 is a flowchart illustrating updating of a DNS on a home gateway according to an embodiment of the disclosure;
Fig. 2 is a schematic diagram illustrating structure of an apparatus on a home gateway according to an embodiment of the disclosure;
Fig. 3 is a flowchart illustrating implementation of the function of DNS resolution agent on a home gateway according to an embodiment of the disclosure; and
Fig. 4 is an example for achieving the function of DNS resolution agent on a home gateway according to an embodiment of the disclosure.

### DETAILED DESCRIPTION

The preferred embodiments of the disclosure will be described in detail below in combination with the accompanying drawings. It should be appreciated that, the preferred embodiments as described below are only used for illustrating and explaining the disclosure, instead of limiting the disclosure.

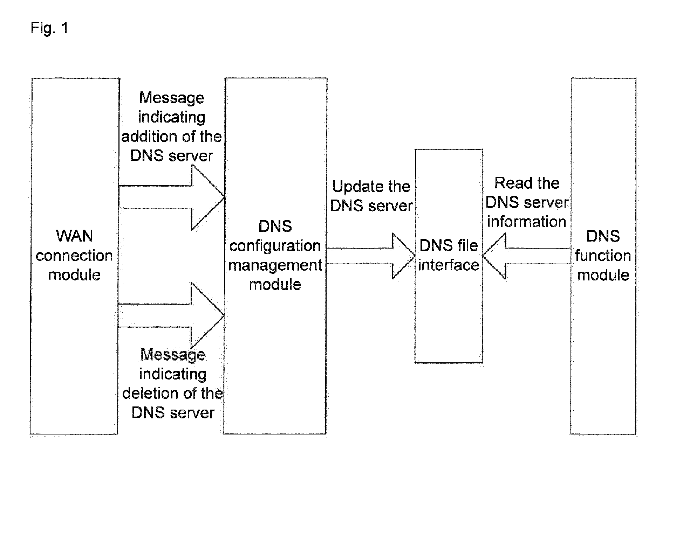

Fig. 1 shows a flowchart illustrating updating of a DNS on a home gateway according to an embodiment of the disclosure. As shown in Fig. 1, the home gateway includes a WAN connection module, a DNS configuration management module, a DNS function module, and a DNS file interface between the DNS configuration management module and the DNS function module.

The WAN connection module, according to addition or deletion of a routing WAN connection connected with the WAN connection module, sends a message to notify the DNS configuration management module whether the DNS server corresponding to the routing WAN connection is added or deleted.

The DNS configuration management module is configured to receive from the WAN connection module a message indicating whether the DNS server is added or deleted, update and maintain DNS server information, and write the updating result into the DNS file interface. The DNS server information includes the IP address of the DNS server.

The DNS file interface is a file interface between the DNS configuration management module and the DNS function module.

The DNS function module obtains the latest DNS server information via the DNS file interface and constructs a DNS server list for maintenance.

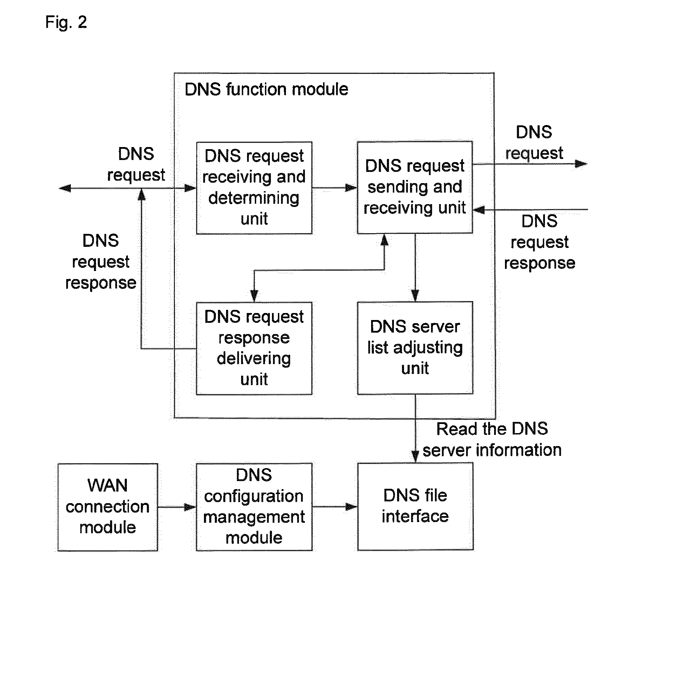

Fig. 2 shows a schematic diagram illustrating structure of an apparatus provided by an embodiment of the disclosure. As shown in Fig. 2, the apparatus includes a WAN connection module, a DNS configuration management module, a DNS file interface and a DNS function module.

The WAN connection module, according to addition or deletion of a routing WAN connection connected with the WAN connection module, sends a message to notify the DNS configuration management module whether the DNS server corresponding to the routing WAN connection is added or deleted. The DNS configuration management module receives from the WAN connection module a message indicating whether the DNS server is added or deleted to update DNS server information, and writes the updated DNS server information into the DNS file interface, so that the updated DNS server information is read by a DNS server list adjusting unit in the DNS function module to perform an updating operation of a DNS server list.

The DNS function module is configured to achieve the function of DNS resolution agent on a home gateway and includes a DNS request receiving and determining unit, a DNS request sending and receiving unit, a DNS server list adjusting unit and a DNS request response delivering unit.

The method for achieving the function of DNS resolution agent on a home gateway according to the disclosure includes the following steps:
after receiving a DNS request from a DNS requester, the DNS request receiving and determining unit parses the obtained DNS request. The request includes a requested DNS and server information of the requested DNS. If the requested DNS and the server information of the requested DNS are the same as the previously-stored information, the DNS request is determined to be a repeated request, and the DNS request sending and receiving unit will not receive the DNS request and a sending command from the DNS request receiving and determining unit connected with the DNS request sending and receiving unit, and will not send the DNS request to DNS servers in the DNS server list in the DNS server list adjusting unit. Otherwise, if the DNS request is not a repeated request, the DNS request receiving and determining unit, according to a fixed time interval, sends the DNS request in turn to the DNS servers recorded in the DNS server list which is connected with the DNS request receiving and determining unit and waits for a DNS request response of a DNS server in a waiting time not greater than the fixed time interval.

The DNS requester may be a device attached to the home gateway, e.g. a personal computer, or may be a local application of the home gateway which needs a DNS request, e.g. a Simple Network Time Protocol (SNTP) etc.

If a certain DNS server does not respond to the request in the waiting time, i.e. the DNS request sending and receiving unit does not receive a request response from a certain DNS server in the waiting time, the DNS server list adjusting unit will receive server information of the DNS from the DNS request sending and receiving unit connected with the DNS server list adjusting unit and reduce the priority of the DNS server to the lowest level, i.e. the DNS server is put at the end of the DNS server list and will be considered at last when the DNS request is processed.

If receiving a request response from a certain DNS server in the waiting time, the DNS request sending and receiving unit sends a request response message to the DNS request response delivering unit and the DNS request response delivering unit parses the DNS request response message. If a field marked as AA in header field of the message is 1, the DNS server is determined to be an authoritative server; if a request response is received from the authoritative server, a request response is sent to the DNS requester based on the response received from the authoritative server and the DNS request sending and receiving unit is notified to stop sending the DNS request to other DNS servers behind the server in the DNS server list. If the field marked as AA in the header field of the message is 0, the DNS server is determined not to be an authoritative server and the request response needs to be further parsed; if the parsing result is correct, the request response is sent to the DNS requester and the DNS request sending and receiving unit is notified to stop sending the DNS request to other DNS servers behind the server in the DNS server list; otherwise, the DNS request is continuously sent to the DNS servers behind the server in the DNS list.

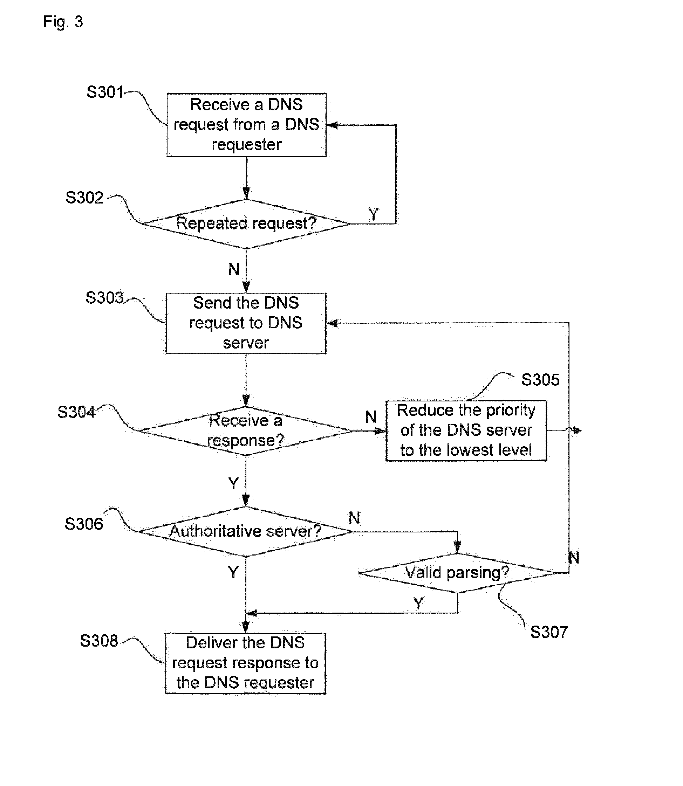

Fig. 3 shows a flowchart illustrating implementation of the function of DNS resolution agent on a home gateway according to an embodiment of the disclosure. As shown in Fig. 3, the process includes the following steps.

Step S301: a DNS request receiving and determining unit receives a DNS request from a DNS requester.

Step S302: the DNS request receiving and determining unit determines whether the DNS request is a repeated DNS request;
if the DNS request is a repeated request, a DNS request sending and receiving unit will not send the DNS request to DNS servers in a DNS server list and waits for the next DNS request; if the DNS request is not a repeated request, Step S303 is performed.

Step S303: the DNS request sending and receiving unit sends the DNS request to the DNS servers in the DNS server list in turn staring from the first DNS server in the DNS server list according to a fixed time interval.

Step S304: the DNS request sending and receiving unit waits to receive a request response of a DNS server in a waiting time not greater than the fixed time interval;
if the request response is not received, Step S305 is performed and the DNS request is sent to the next DNS server in the DNS server list; if the request response is received, Step S306 is performed.

Step S305: a DNS server list adjusting unit receives from the DNS request sending and receiving unit the information related to a DNS server which does not respond to the request, and reduces the priority of the DNS server to the lowest level in the DNS server list, i.e. put the record of the DNS server at the end of the list.

Step S306: a DNS request response delivering unit parses a request response message and determines whether the server sending the request response is an authoritative server;
if the server sending the request response is an authoritative server, Step S308 is performed; if the server sending the request response is not an authoritative server, Step S307 is performed.

Step S307: a request response processing unit determines whether the request response parsing is correct;
if the DNS request response parsing is correct, Step S308 is performed; if the request response parsing is invalid, continue to send the DNS request to other DNS servers.

Step S308: the DNS request response is delivered to the DNS requester by the DNS request response delivering unit, and the DNS request sending and receiving unit is notified to stop sending the DNS request to other DNS servers behind the server in the DNS server list.

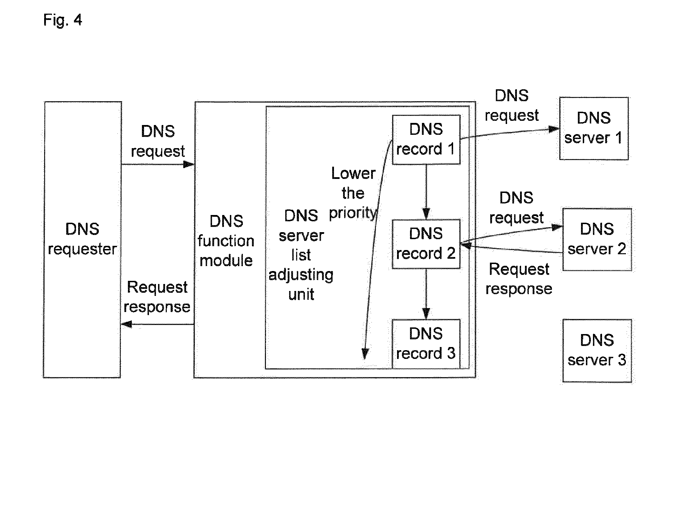

Fig. 4 is an example for achieving the function of DNS resolution agent on a home gateway according to an embodiment of the disclosure. As shown in Fig. 4, provided that there are three DNS server records maintained by a DNS server list adjusting unit in a DNS function module, i.e. DNS Record 1 corresponding to DNS Server 1, DNS Record 2 corresponding to DNS Server 2, and DNS Record 3 corresponding to DNS Server 3. A DNS resolution agent process is described as follows:
a DNS requester sends a DNS request to a home gateway, a DNS function module of the home gateway receives the DNS request and determines that the DNS request is not a repeated request;
the DNS function module sends a request message to the three DNS servers in turn according to a fixed time interval, sends the request message to DNS Server 1 first, and waits for a DNS request response of DNS Server 1 in a waiting time not greater than the fixed time interval;
in the waiting time, if DNS Server 1 does not respond to the request, the request is sent to DNS Server 2; at the same time, a DNS server list adjusting unit reduces the priority of the first DNS server to the lowest level;
in the waiting time, the DNS function module receives and parses a request response from DNS Server 2, and after determining that the response is correct or determining that DNS Server 2 which responds to the request is an authoritative server, stops sending the DNS request to DNS Server 3; the request is ended;
the DNS function module sends a request response parsing result to the DNS requester.

To sum up, with the disclosure, a DNS request of a device attached to a home gateway can be responded accurately and speedily by determining a repeated request and identifying an available DNS server and an authoritative server, thus satisfying the requirement of DNS resolution agent of complicated router networking on the home gateway, avoiding resource waste caused by sending the DNS request repeatedly, and also avoiding inquiry time waste caused by the case where a request message is sent to a DNS server, which is unavailable or disabled, but still put at the head of all DNS servers, therefore the DNS resolution efficiency is increased significantly.

Although the disclosure is described in detail above, the disclosure is not limited to the above mentioned. Various modifications may be made by those skilled in the art according to the principle of the disclosure. Therefore, any modifications made according to the principle of the disclosure shall fall into the protection scope of the disclosure.

## Claims

1. An apparatus for achieving the function of Domain Name System (DNS) resolution agent, comprising: a DNS request receiving and determining unit, a DNS request sending and receiving unit, a DNS request response delivering unit and a DNS server list adjusting unit, wherein
the DNS request receiving and determining unit is configured to receive a DNS request from a DNS requester and determine whether the DNS request is a repeated request;
the DNS request sending and receiving unit is configured to, when determining that the DNS request is not a repeated request, send a DNS request message to DNS servers in a DNS server list in turn according to a fixed time interval, and wait to receive a request response returned by the DNS server in a waiting time not greater than the fixed time interval;
the DNS request response delivering unit is configured to deliver a valid request response received in the waiting time to the DNS requester;
the DNS server list adjusting unit is configured to, when no request response is received from a DNS server in the waiting time, reduce the priority of the DNS server to the lowest level in the DNS server list.

2. The apparatus according to claim 1, further comprising: a Wide Area Network (WAN) connection module, a DNS configuration management module, and a DNS file interface, wherein
the WAN connection module is configured to, according to addition or deletion of a routing WAN connection connected with the WAN connection module, notify, through a message, the DNS configuration management module whether a DNS server corresponding to the routing WAN connection is added or deleted;
the DNS configuration management module is configured to receive a message indicating whether the DNS server is added or deleted, update and maintain DNS server information, and write the updated and maintained DNS server information into the DNS file interface;
the DNS file interface is configured to receive the updated DNS server information so that the DNS server information can be read by the DNS server list adjusting unit to execute an updating operation of the DNS server list.

3. A method for achieving the function of Domain Name System (DNS) resolution agent, comprising:
receiving a DNS request from a DNS requester and determining whether the DNS request is a repeated request;
when the DNS request is not a repeated request, sending a DNS request message to DNS servers in a DNS server list in turn according to a fixed time interval and waiting to receive a request response returned by the DNS server in a waiting time not greater than the fixed time interval;
when a valid request response is received in the waiting time, delivering the request response to the DNS requester;
when no request response is received from a DNS server in the waiting time, reducing the priority of the DNS server in the DNS server list to the lowest level.

4. The method according to claim 3, further comprising: when a DNS server in the DNS server list is updated,
according to addition or deletion of a routing WAN connection connected with a Wide Area Network (WAN) connection module, notifying, through a message, a DNS configuration management module whether a DNS server corresponding to the WAN connection is added or deleted;
receiving a message indicating whether the DNS server is added or deleted, updating and maintaining DNS server information, and writing the updated and maintained DNS server information into a DNS file interface;
receiving and updating the DNS server information so that the DNS server information can be read by a DNS server list adjusting unit, to execute an updating operation of the DNS server list.

5. The method according to claim 3, wherein the DNS request comprises a requested DNS and server source address information of the requested DNS which are used to determine a repeated request.

6. The method according to claim 5, further comprising: when the requested DNS and the server source address information of the requested DNS are the same as the stored information, determining that the DNS request is a repeated request and sending no DNS request to the DNS servers in the DNS server list.

7. The method according to claim 3, wherein the valid request response comprises a request response with a correct parsing result and a request response sent by an authoritative server.

8. The method according to claim 7, further comprising: after a valid request response is received by a DNS request response delivering unit, stopping, by a DNS request sending unit, sending the DNS request to other DNS servers.
